# EUROPÄISCHE PATENTANMELDUNG

(11) **EP 0 746 081 A2**
(43) Veröffentlichungstag der Anmeldung: **04.12.1996**
(21) Anmeldenummer: 96107940.7
(22) Anmeldetag: 17.05.1996
(51) Int. Cl.: H02K 7/20

(54) **Halteelement zur zumindest teilweisen nachgiebigen Halterung des Ständers eines Gebers**

(30) Priorität: 01.06.1995 DE 19520202
(71) Anmelder: SIEMENS AKTIENGESELLSCHAFT, 80333 München (DE)
(72) Erfinder: Kessler, Winfried, Dipl.-Ing. (FH), 97647 Hausen (DE); Zisler, Michael, Dipl.-Ing. (FH), 97456 Dittelbrunn (DE); Matthias, Braun, Dipl.-Ing. (FH), 97711 Thundorf (DE); Frank, Manfred, Dipl.-Ing. (FH), 97711 Volkershausen (DE); Dünisch, Paul, 97724 Burglauer (DE)

(57) **Zusammenfassung**

Die Erfindung betrifft ein Halteelement zur zumindest teilweisen nachgiebigen Halterung des Ständers eines Gebers (8), der mit seiner Läuferwelle (7) starr mit der Läuferwelle (4) eines elektrischen Motors (2) gekoppelt ist. Eine hohe Verdrehsteifigkeit für das Halteelement wird dadurch erreicht, daß dieses einen flach ausgebildeten Zentralteil (14) aufweist, an dem mindestens zwei aus der Ebene des Zentralteiles (14) herausgebogene erste Haltearme (12) und mindestens zwei in der Ebene oder zumindest annähernd in der Ebene des Zentralteiles (14) liegende zweite Haltearme (13) vorgesehen sind, die einen in radialer und/oder axialer Richtung des Ständers nachgiebigen Bereich aufweisen, wobei die ersten Haltearme (12) mit dem Ständergehäuse des Gebers (8) und die zweiten Haltearme (13) direkt oder indirekt mit dem Motorgehäuse (1) verbunden sind.

## Beschreibung

Die Erfindung betrifft eine Halteelement gemäß dem Oberbegriff des Anspruchs 1.

Ein solches Halteelement ist aus der Siemens-Zeitschrift 1978, Seiten 463-466 bekannt. Das bekannte Halteelement besteht aus einer Lasche, die an ihrem einen Ende mittels eines Kugelgelenks an das Ständergehäuse des Gebers und mit ihrem anderen Ende ebenfalls mittels eines Kugelgelenkes an einem Gehauseteil des Motors angekoppelt ist. Ein solches Halteelement weist zwar eine aus verschiedenen Gründen gewünschte hohe Verdrehsteifigkeit auf, ist aber in seinem konstruktiven Aufbau sehr aufwendig.

Durch die DE-C-33 10 564 ist es bekannt, als Halteelement für einen Geber eine Membran vorzusehen. Eine solche Membran stellt zwar ein einfaches Bauteil dar, ist jedoch in allen Richtungen sehr nachgiebig. Durch ein solches weiches Halteelement ergeben sich insbesondere beim Zusammenwirken des Gebergerätes mit schnell reagierenden elektronischen Regelgeräten Probleme, da die Anbaufrequenz des Gebergerätes infolge der Weichheit des Halteelementes relativ niedrig ist und es daher leicht zu Resonanzen beim Regelgerät kommt.

Der Erfindung liegt die Aufgabe zugrunde, ein Halteelement der eingangs beschriebenen Art so auszubilden, daß dieses trotz eines einfachen Aufbaus eine hohe Verdrehsteifigkeit besitzt.

Die Lösung der gestellten Aufgabe gelingt durch die im Kennzeichen des Anspruchs 1 angegebenen Merkmale. Durch die in der Ebene des Zentralteiles liegenden zweiten Haltearme ergibt sich eine hohe Verdrehsteifigkeit des Halteelementes, die durch den radial und/oder axial nachgiebigen Bereich dieser Haltearme in einer gewünschten Weise beeinflußt werden kann. Das Halteelement kann als einfaches Stanz-Biegeteil hergestellt werden, so daß es nur einen geringen Fertigungsaufwand erfordert.

Dadurch, daß die ersten Haltearme um 90° oder annähernd 90° gegenüber der Ebene des Zentralteils abgebogen sind, erstrecken sie sich parallel zum Gebergehäuse und können somit in einfacher Weise am Außenumfang desselben befestigt werden.

Eine gewünschte Elastizität der zweiten Haltearme läßt sich dadurch erzielen, daß im Zentralteil und/oder im Übergangsbereich zu den zweiten Haltearmen jeweils mindestens ein zu jedem der zweiten Haltearme im wesentlichen quer verlaufender Einstich vorgesehen ist oder auch dadurch, daß an den zweiten Haltearmen jeweils mindestens eine quer verlaufende Sicke ausgebildet ist. Durch eine solche Elastizität der zweiten Haltearme wird die durch eine hohe Verdrehsteifigkeit bedingte stärkere Belastung der Lager des Gebers gemildert.

Anhand von in der Zeichnung dargestellten Ausführungsbeispielen wird die Erfindung nachfolgend näher erläutert. Es zeigt:
- FIG 1: in einem Teilschnitt einen an einem elektrischen Motor angebauten Geber, dessen Ständer mittels eines Halteelementes am Motorgehäuse gehaltert ist,
- FIG 2 bis 5: verschiedene Ausführungsformen eines Halteelementes in Draufsicht,
- FIG 2a bis 5a: die Ausführungsformen eines Halteelementes nach den FIG 2 bis 5 in Seitenansicht.

Mit 1 ist das Ständergehäuse eines elektrischen Motors 2 bezeichnet, an dem ein Lagerschild 3 befestigt ist, in welchem die Läuferwelle 4 des Motors 2 mittels eines Wälzlagers 5 drehbar gelagert ist. In der Stirnseite der Läuferwelle 4 ist eine konusförmig gestaltete Vertiefung 6 vorgesehen, in die das ebenfalls konisch ausgebildete freie Ende der Läuferwelle 7 eines Gebers 8 eingesteckt ist. Mittels einer Spannschraube 9 sind die beiden Läuferwellen 4 und 7 starr miteinander verbunden. Der in der Zeichnung nicht näher dargestellte Läufer des Gebers 8 wird somit von der Läuferwelle 4 des Motors 2 angetrieben. Das Gebergehäuse 10 des Gebers 8 ist auf dessen Läuferwelle 7 gelagert.

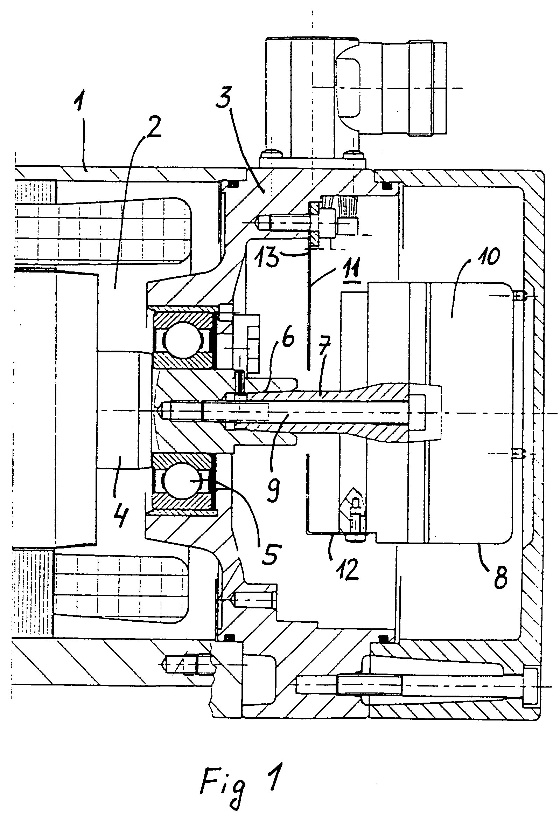

Durch ein Halteelement 11, welches einerseits am Lagerschild 3 und andererseits am Gebergehäuse 10 befestigt ist, wird das Gebergehäuse 10 gegen Verdrehen gesichert. Das Halteelement 11 weist erste Haltearme 12 und zweite Haltearme 13 auf. Die ersten Haltearme 12 sind gegenüber den zweiten Haltearmen 13 um 90° abgebogen und mit dem Gebergehäuse 10 verbunden. Die zweiten Haltearme 13 sind am Lagerschild 3 befestigt. In der FIG 1 ist die Verbindungsstelle der ersten Haltearme 12 mit dem Gebergehäuse 10 um 90° in die Zeichnungsebene gedreht.

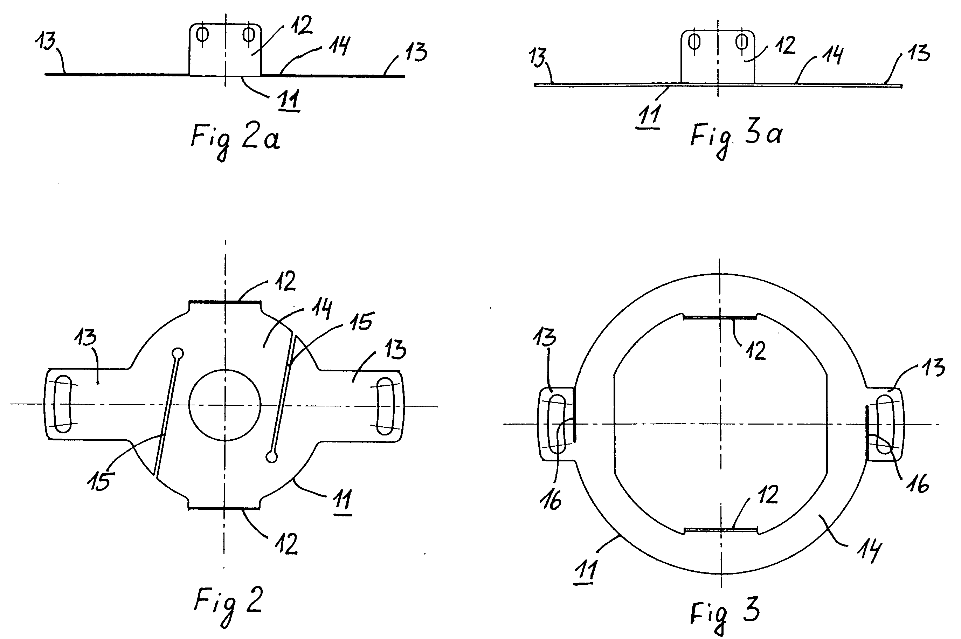

Die Ausführungsform der Halteelemente 11 wird in den FIG 2 bis 5 verdeutlicht. Die Halteelemente 11 weisen jeweils einen Zentralteil 14 auf, an dessen Umfang die ersten und zweiten Haltearme 12 und 13 jeweils um 90° gegeneinander versetzt angeordnet sind. Somit liegen die ersten und zweiten Haltearme 12 und 13 jeweils einander gegenüber.

Die ersten Haltearme 12 sind, wie jeweils aus den FIG 2a bis 5a ersichtlich, um 90° aus der Ebene des Zentralteiles 14 herausgebogen. Die zweiten Haltearme 13 erstrecken sich dagegen in der Ebene des Zentralteiles 14, siehe FIG 2 bis 5. Dadurch, daß die zweiten Haltearme 13 in der Ebene des Zentralteiles 14 liegen, weisen derartig gestaltete Halteelemente eine hohe Verdrehsteifigkeit auf. Eine hohe Verdrehsteifigkeit der Halteelemente 11 führt zu einer hohen Eigenfrequenz des Geberanbausystems. Eine solche hohe Eigenfrequenz des Gebersystems ist insbesondere bei mit dem Gebersystem zusammenarbeitenden schnell reagierenden elektronischen Regelgeräten erforderlich. Die Eigenfrequenz des Gebersystems muß über der Ansprechgeschwindigkeit der angeschlossenen Regelgeräte liegen, da es sonst zu Resonanzerscheinungen kommt.

Trotz der hohen Verdrehsteifigkeit der Halteelemente 11 ist andererseits aber auch noch ein Radial- und Axialausgleich mittels der Halteelemente 11 erwünscht, da ansonsten beim Fehlen eines solchen Ausgleiches das Lagersystem des Gebers verstärkt werden muß. Um einen solchen gewünschten Radial- und Axialausgleich mittels der verdrehsteif ausgebildeten Halteelemente 11 zu ermöglichen, weisen die zweiten Haltearme 13 einen in radialer und/oder axialer Richtung nachgiebigen Bereich auf.

Gemäß dem Ausführungsbeispiel nach FIG 2 sind zur Erzielung der gewünschten Elastizität im Zentralteil 14 zwei sekantenartig verlaufende Einstiche 15 vorgesehen.

Bei dem Ausführungsbeispiel nach FIG 3, bei welchem der Zentralteil 14 des Halteelementes 11 ringförmig ausgebildet ist, sind zwei tangential verlaufende Einstiche 16 an der Verbindungsstelle der zweiten Haltearme 13 mit dem Zentralteil 14 vorgesehen. Die ersten Haltearme 12 sind bei diesem Halteelement 11 am Innenumfang des ringförmigen Zentralteiles 14 angebracht.

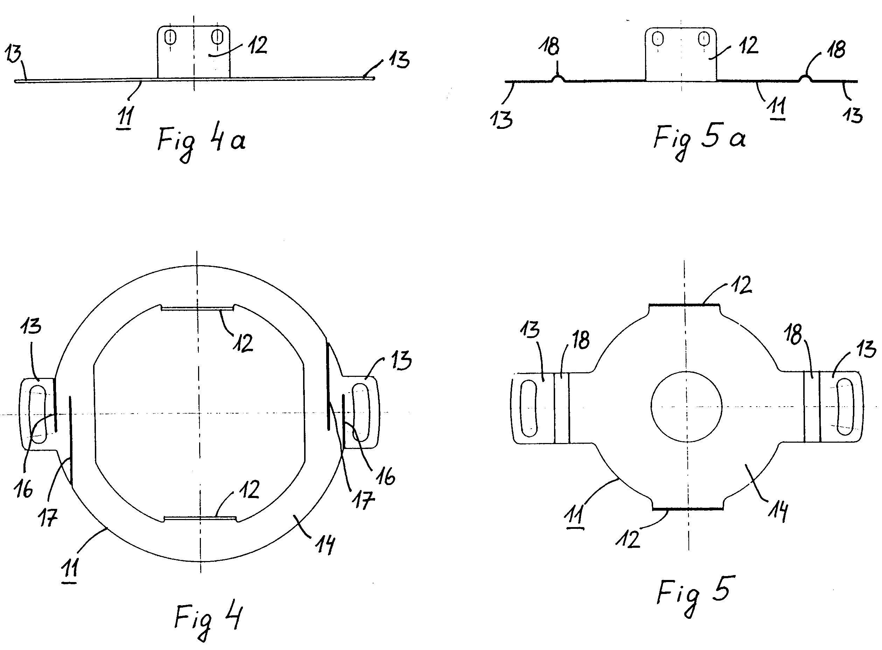

Eine Weiterbildung des Halteelementes 11 nach FIG 3 zeigt die FIG 4. Zur weiteren Erhöhung der Elastizität in radialer und axialer Richtung ist zu dem tangential verlaufenden Einstich 16 an der Verbindungsstelle der zweiten Haltearme 13 in dem Zentralteil 14 noch ein weiterer parallel verlaufender Einstich 17 im Material des Zentralteiles 14 vorgesehen.

Bei der Ausführungsform nach FIG 5 ist an jedem der zwei Haltearme 13 eine querverlaufende Sicke 18 ausgebildet. Durch eine solche Sicke 18 erhalten diese Haltearme 13 eine gewisse Elastizität in radialer und axialer Richtung.

## Patentansprüche

1. Halteelement zur zumindest teilweisen nachgiebigen Halterung des Ständers (10) eines Gebers (8), der mit seiner Läuferwelle (7) starr mit der Läuferwelle (4) eines elektrischen Motors (2) gekoppelt ist,
**dadurch gekennzeichnet**,
daß das Halteelement (11) einen flach ausgebildeten Zentralteil (14) aufweist, an dem mindestens zwei aus der Ebene des Zentralteiles (14) herausgebogene erste Haltearme (12) und mindestens zwei in der Ebene oder zumindest annähernd in der Ebene des Zentralteiles (14) liegende zweite Haltearme (13) vorgesehen sind, die einen in radialer und/oder axialer Richtung des Ständers (10) nachgiebigen Bereich aufweisen, wobei die ersten Haltearme (12) mit dem Ständergehäuse (10) des Gebers (8) und die zweiten Haltearme (13) direkt oder indirekt mit dem Motorgrehäuse (1) verbunden sind.

2. Halteelement nach Anspruch 1,
**dadurch gekennzeichnet**,
daß die ersten Haltearme (12) um 90° oder annähernd 90° gegenüber der Ebene des Zentralteiles (14) abgebogen sind.

3. Halteelement nach Anspruch 1 oder 2,
**dadurch gekennzeichnet**,
daß im Zentralteil (14) selbst und/oder im Übergangsbereich zu den zweiten Haltearmen (13) jeweils mindestens ein zu jedem der zweiten Haltearme (13) im wesentlichen quer verlaufender Einstich (16;17;18) vorgesehen ist.

4. Halteelement nach Anspruch 1 oder 2,
**dadurch gekennzeichnet**,
daß an den zweiten Haltearmen (13) jeweils mindestens eine quer verlaufende Sicke (18) ausgebildet ist.
